# EUROPÄISCHE PATENTANMELDUNG

(11) **EP 0 854 124 A1**
(43) Veröffentlichungstag der Anmeldung: **22.07.1998**
(21) Anmeldenummer: 98100241.3
(22) Anmeldetag: 09.01.1998
(51) Int. Cl.: C04B 38/08

(54) **Feuerfester keramischer Stein**

(30) Priorität: 15.01.1997 DE 19701109
(71) Anmelder: DIDIER-WERKE AG, 65189 Wiesbaden (DE)
(72) Erfinder: Eschner, Axel, Dr., 65187 Wiesbaden (DE); Nazirizadeh, Morteza, Dr., 65207 Wiesbaden (DE)

(57) **Zusammenfassung**

Die Erfindung betrifft einen feuerfesten keramischen Stein und im speziellen einen feuerfesten keramischen Stein mit niedriger Wärmeleitfähigkeit.

## Beschreibung

Die Erfindung betrifft einen feuerfesten keramischen Stein und in speziellen einen feuerfesten keramischen Stein mit niedriger Wärmeleitfähigkeit.

Derartige Steine sind im wesentlichen für zwei Anwendungsbereiche bekannt. Ein erster Anwendungsbereich ist die Hintermauerung von feuerfesten Auskleidungen durch sogenannte Isoliersteine. Dabei steht die thermische Isolierung im Vordergrund. Weder bei der Verwendung in metallurgischen Schmelzgefäßen noch bei der Verwendung beispielsweise in Zement-Drehrohröfen sind diese Steine irgendwelchen mechanischen oder chemischen Angriffen ausgesetzt.

Gemäß der DE 33 26 270 C2 werden den genannten Isoliersteinen bei der Herstellung Ausbrennstoffe zugesetzt, die das Porenvolumen und damit die isolierenden Eigenschaften nach dem Brand erhöhen. Auf einem ähnlichen Prinzip beruht auch der Vorschlag gemäß DE 33 02 368 A1, bei dem Blähton zur Erhöhung des Porenvolumens eines Leichtbausteins eingesetzt wird.

Aber auch bei Steinen, die einen unmittelbaren thermischen, mechanischen und chemischen Angriff ausgesetzt sind, beispielsweise bei Steinen zur Auskleidung von Zement-Drehrohröfen stellt eine möglichst geringe Wärmeleitfähigkeit ein wesentliches Kriterium dar. Dies liegt vor allem darin, daß Drehrohröfen in der Regel einlagig zugestellt werden, daß heißt eine Isolierschicht oder Hintermauerung entfällt. Die dort eingesetzten Steine müssen demzufolge ganz unterschiedliche Anforderungen erfüllen.

Der Erfindung liegt die Aufgabe zugrunde, einen Stein der letztgenannten Art hinsichtlich einer möglichst niedrigen Wärmeleitfähigkeit, bei ansonsten vergleichbaren chemischen und mechanischen Eigenschaften, zu optimieren.

Dabei geht die Erfindung von der Erkenntnis aus, daß dieses Ziel durch einen im wesentlichen aus zwei Komponenten aufgebauten Stein erreicht werden kann.

Der Stein besteht gegenüber dem Stand der Technik unverändert aus zirka 90 bis 99 Gew.-% eines metalloxidischen Matrixmaterials, beispielsweise Sintermagnssia, Schmelzmagnesia, Tonerde, Korund, Zirkoniumdioxid oder Spinellen daraus.

Er enthält weiter 1 bis 10 Gew.-% eines in Hohlkörperform konfektionierten, thermisch stabilen Füllmaterials in einer Kornfraktion kleiner 5,0 mm.

Die Verwendung von oxidischen Hohlkugeln ist zwar aus der EP 0 723 945 A2 bekannt, dort jedoch zur Herstellung von wärmeisolierenden Formkörpern, bei denen die Hohlkugeln lediglich durch ein Bindemittel untereinander fixiert werden. Deshalb soll das Verhältnis von Hohlkugeln zu Bindemittel nach den Ausführungsbeispielen etwa 10:1 betragen, wenngleich allgemeine Gewichtsverhältnisse von Hohlkugeln zu Bindemittel von 95:5 bis 20:80 genannt werden.

In jedem Fall ergeben sich wärmeisolierende Formkörper einer völlig anderen Gattung als hier beansprucht.

Nach einer Ausführungsform sollen die Gewichtsverhältnisse des metalloxidischen Matrixmaterials zu dem genannte Füllmaterial 93-97 zu 3:7 betragen. Das (konventionelle) metalloxidische Matrixmaterial steht also eindeutig im Vordergrund und ist unverzichtbar, um die - neben einer geringen Wärmeleitfähigkeit - unverändert geforderten guten chemischen, thermischen und mechanischen Eigenschaften des feuerfesten keramischen Steins zu erfüllen.

Das Hohlkörper-Füllmaterial kann aus demselben Material wie das Matrixmaterial bestehen, also beispielsweise aus Tonerde oder Korund.

Nach einer Ausführungsform ist das Füllmaterial mit dem metalloxidischen Matrixmaterial spinellbildend.

Wird beispielsweise Sintermagnesia als wesentliche Komponente des Matrixmaterials eingesetzt so kann das Füllmaterial aus Hohlkugelkorund bestehen, welcher bei entsprechenden Brenntemperaturen mit dem Matrixmaterial spinellbildend ist, wie nachstehend noch näher ausgeführt wird.

Es hat sich in jeder Hinsicht als eine Optimierung erwiesen das Matrixmaterial und das Füllmaterial aus miteinander spinellbildenden Komponenten auszuwählen. Hierdurch kann die Stabilität des Steins insgesamt zusätzlich verbessert werden. Auf diese Weise werden gleichzeitig die mechanischen, chemischen und thermischen Eigenschaften optimiert.

Je nach Auswahl der Rohstoffe kann der Fachmann eine geeignete (notwendige) Brenntemperatur ebenso wie eine entsprechende (notwendige) Brennzeit empirisch ermitteln.

Durch den hohen Anteil an konventionellem metalloxidischem Matrixmaterial können trotz der Hohlkörper-Zuschlagstoffe die Druck- und Abriebfestigkeiten des Steins gegenüber bekannten Steinqualitäten weitestgehend erhalten bleiben. Damit kann der Stein vor allem auch bei einlagigen Ausmauerungen Anwendung finden, die dem jeweils zu behandelnden Produkt und der Ofenatmosphäre direkt ausgesetzt sind.

Steine auf Basis Sintermagnesia beziehungsweise Magnesia-Tonerde-Spinell bieten sich zur Herstellung von Drehofen-Steinen an. Das Füllmaterial besteht dann beispielsweise aus Hohlkugelkorund, wobei dieser einen Al₂O₃-Gehalt von über 97 Gew.-%, vorzugsweise über 99 Gew.-% aufweisen sollte.

Weitere Merkmale der Erfindung ergeben sich aus den Merkmalen der Unteransprüche sowie den sonstigen Anmeldungsunterlagen.

Die Erfindung wird nachstehend anhand verschiedener Beispiele näher erläutert.

Als Referenz (R) dient ein Stein auf Basis Sintermagnesia (92,5 Gew.-%) mit folgender Korngrößenverteilung:
ca. 40 Gew.-% im Bereich 1,0 bis 5,0 mm,
ca. 20 Gew.-% im Bereich 0,1 bis 1,0 mm und
ca. 40 Gew.-% im Mehlanteil (kleiner 0,1 mm).

Der bei ca. 1.700 °C gebrannte Referenzstein enthält außerdem 5 Gew.-% Magnesia-Tonerde Spinell der Korngröße 1 bis 4 mm sowie 2,5 Gew.-% Korund der Kornfraktion 0,5 bis 1,5 mm.

Dem gegenübergestellt wird ein erster erfindungsgemäßer Stein (A) aus 91 Gew.-% der vorgenannten Sintermagnesia, 5 Gew.-% des beschriebenen MA-Spinells und 4 Gew.-% Hohkugel-Korund mit 99 Gew.-% Al₂O₃ in einer Kornfraktion 1 bis 3 mm.

Eine weitere erfindungsgemäße Probe (B) betrifft einen Stein analog A, der jedoch etwa doppelt so lang bei ebenfalls ca. 1.700 °C gebrannt wurde wie der Stein A unter gleichzeitiger Spinellbildung zwischen dem Hohlkugel-Korund und dem magnesitischen Matrixmaterial.

Die technischen Meßdaten der Proben R, A und B sind in nachstehender Tabelle aufgeführt.

| Probe | A | B | R |
|---|---|---|---|
| Rohdichte (g/cm³) | 2,83 | 2,80 | 2,85 |
| Porosität (%) | 20,00 | 20,70 | 19,00 |
| Kaltdruckfestigkeit (N/mm²) | 42,00 | 35,00 | 50,00 |

| Wärmeleitfähigkeit (W/mK) | | | |
|---|---|---|---|
| 400 °C | 2,70 | 2,60 | 4,60 |
| 700 °C | 2,50 | 2,40 | 3,70 |
| 1100°C | 2,40 | 2,20 | 2,90 |

Zunächst fällt die (erwartungsgemäß) geringere Rohdichte der Proben A und B auf. Diese steht in unmittelbarem Zusammenhang mit der (erwartungsgemäß) höheren Porosität.

Während die Kaltdruckfestigkeit (ebenfalls erwartungsgemäß) leicht gegenüber der Referenzprobe abfällt zeigen die angegebenen Werte der Wärmeleitfähigkeit bei 400, 700 und 1100 °C charakteristische Verbesserungen der Steine A und B bis zu 40 %.

Die dadurch bedingten Vorteile wurden bei einem Zement-Drehrohrofen und einer Ofen Innentemperatur von 1450 °C verifiziert.

Es ergaben sich Ofenmanteltemperaturen von
- ca. 430 °C (unter Verwendung der Steine R)
- ca. 390 °C (unter Verwendung der Steine A)
- ca. 375 °C (unter Verwendung der Steine B).

Diese um 40 bis 50 K niedrigeren Ofenaußentemperaturen reduzieren entsprechend die Wärmeverluste und Energiekosten. Außerdem werden thermomechanische Probleme des Ofens parallel dazu reduziert.

## Patentansprüche

1. Feuerfester keramischer Stein aus
1.1. 90 bis 99 Gew.-% metalloxidischem Matrixmaterial,
1.2. 1 bis 10 Gew.-% eines in Hohlkörperform konfektionierten, thermisch stabilen Füllmaterials in einer Kornfraktion kleiner 5,0 mm.

2. Stein nach Anspruch 1 aus
2.1. 93 bis 97 Gew.-% metalloxidischem Matrixmaterial,
2.2. 3 bis 7 Gew.-% eines in Hohlkörperform konfektionierten, thermisch stabilen Füllmaterials in einer Kornfraktion kleiner 5,0 mm.

3. Stein nach Anspruch 1, bei dem das Füllmaterial ein metalloxidisches Material analog dem Matrixmaterial ist.
